Europäisches Patentamt

European Patent Office

Office européen des brevets

(19)

(11) Veröffentlichungsnummer: **0 021 159**
**B1**

(12) **EUROPÄISCHE PATENTSCHRIFT**

(45) Veröffentlichungstag der Patentschrift:
18.05.83

(21) Anmeldenummer: 80103109.7

(22) Anmeldetag: 04.06.80

(51) Int. Cl.³: **B 29 D 27/04,** B 29 D 27/00

(54) Einrichtung zum kontinuierlichen Herstellen von Schaumstoffblöcken oder Schaumstoffbahnen.

(30) Priorität: 15.06.79 DE 2924185

(43) Veröffentlichungstag der Anmeldung:
07.01.81 Patentblatt 81/1

(45) Bekanntmachung des Hinweises auf die Patenterteilung:
18.05.83 Patentblatt 83/20

(84) Benannte Vertragsstaaten:
AT BE CH DE FR GB IT LI NL SE

(56) Entgegenhaltungen:
EP-A-0 021 564
DD-A-92 549
DE-A-2 815 160
GB-A-2 004 229
US-A-3 553 300

(73) Patentinhaber: BAYER AG, Zentralbereich Patente, Marken und Lizenzen, D-5090 Leverkusen 1, Bayerwerk (DE)

(72) Erfinder: Hoffmann, Erwin, Martin-Buber-Strasse 47, D-5090 Leverkusen 3 (DE)
Erfinder: Krippl, Kurt, Niederstrasse 104, D-4019 Monheim (DE)
Erfinder: Kraft, Karl Josef, Dr., Heymannstrasse 38, D-5090 Leverkusen (DE)
Erfinder: Gabrysch, Gerd, grad. Ing., Eichholzer Weg 26, D-5068 Odenthal (DE)
Erfinder: Redmer, Frank, Ewald-Roell-Strasse 15, D-5090 Leverkusen 3 (DE)

ACTORUM AG

Einrichtung zum kontinuierlichen Herstellen von Schaumstoffblöcken oder Schaumstoffbahnen

Die Erfindung betrifft eine Einrichtung zum kontinuierlichen Herstellen von Schaumstoffblöcken oder Schaumstoffbahnen, die gegebenenfalls mit Deckschichten kaschiert sind, aus einem flüssigen Reaktionsgemisch, bestehend aus einer Förderfläche, über welcher einlaufseitig eine Reaktionsgemischaufgabevorrichtung und ein Querverteilorgan für das Reaktionsgemisch vorgesehen sind, wobei zwischen Querverteilorgan und der Förderfläche ein einstellbarer Spalt gebildet ist, dessen Weite — über die Arbeitsbreite gesehen — unterschiedlich einstellbar ist.

Mit derartigen Einrichtungen werden endlose Schaumstoffblöcke oder Sandwichbahnen, die einen zwischen Deckschichten angeordneten Schaumstoffkern aufweisen, hergestellt. Im letzteren Falle bedient man sich eines sogenannten Doppeltransportbandes, bestehend aus einem Unter- und einem Oberband. Im Falle der Blockherstellung kann der sich bildende Schaumstoff frei aufsteigen und wird gegebenenfalls von oben her zur Vermeidung einer Wölbung egalisiert; im Falle der Sandwichbahnenherstellung wird zwischen den beiden Bändern Druck auf den entstehenden Schaumstoff ausgeübt.

Ein bisher noch nicht zufriedenstellend gelöstes Problem ist die kontinuierliche Verteilung des Reaktionsgemisches sowohl in Förderrichtung als auch insbesondere in Querrichtung.

Eines der gebräuchlichsten Verfahren ist der Auftrag des Gemisches mittels eines zeilenförmig hin- und herbewegbaren Mischkopfes. Dabei entstehen jedoch an den Rändern Materialanhäufungen. Die oszillierende Bewegung des Mischkopfes verursacht an den Wendepunkten wegen der erforderlichen hohen Geschwindigkeit starke Stösse, die hohen Verschliess erzeugen und Spritzer verursachen. Bei hohen Fertigungsgeschwindigkeiten tritt als weiteres Problem auf, dass sich der Abstand der Zeilen des zickzackförmig aufgetragenen Gemisches zu stark vergrössert.

Auch der Einsatz eines geneigten Aufgabetisches ist bekannt. Er hat den Vorteil, dass das aus dem Mischkopf ausströmende Reaktionsgemisch infolge des Neigungswinkels sanfter auf die Aufgabefläche auftrifft und dabei bereits auf diesem Aufgabetisch teilweise über die Arbeitsbreite verteilt wird. Bei grösseren Arbeitsbreiten hat man auch schon mehrere parallel angeordnete Mischköpfe oder Ausläufe verwendet. Schwierigkeiten entstehen aber dort, wo die einzelnen Ströme beim Ausbreiten ineinanderfliessen. Es bilden sich im Fertigprodukt Schlieren und Blasen.

Man hat deshalb auch schon versucht, den Gemischauftrag mittels eines Rakels oder einer Walze unter Bildung eines Spaltes mit der Förderfläche zu egalisieren. Dies wird bei grösseren Arbeitsbreiten problematisch. Es hat sich nämlich gezeigt, dass dann die Querverteilung nicht schnell genug vonstatten geht und dass das Reaktionsgemisch an den Rändern bereits vor dem Passieren des Spaltes zu schäumen beginnt. Daraus folgen inhomogene Randzonen, und zwar sowohl in der Struktur als auch in der Dicke. Deshalb bereitet insbesondere die Verarbeitung schnell reagierender Systeme erhebliche Schwierigkeiten.

Die ältere, nicht vorpublizierte europäische Patentanmeldung EP-A Nr. 0021564, für welche die Vertragsstaaten BE, DE, FR, GB, IT, NL und SE benannt sind, gehört zum Stand der Technik nach Art. 54 (3) (4) EPÜ, gemäss welchem es bekannt ist, die Weite des zwischen Querverteilorgan und Förderfläche gebildeten Spaltes — über die Arbeitsbreite gesehen — unterschiedlich einstellbar zu gestalten.

Sowohl nach der Patentanmeldung EP-A Nr. 0021564 als auch nach der hier vorliegenden Patentanmeldung ist die Aufgabe zu lösen, bei der kontinuierlichen Fertigung von endlosen Schaumstoffblöcken bzw. Sandwichbahnen mit Schaumstoffkern durch entsprechende maschinelle Massnahmen die Gemischverteilung über die Arbeitsbreite derart zu verbessern, dass eine zufriedenstellende Homogenität des Fertigproduktes erzielt wird. Über die Aufgabenstellung der älteren Patentanmeldung hinaus soll die Länge des Einlaufs bzw. die Gesamtlänge der Einrichtung möglichst gering gehalten sein.

Der beiden Patentanmeldungen gemeinsame Teil der Aufgabe wird dadurch gelöst, dass die Weite des Spaltes — über die Arbeitsbreite gesehen — unterschiedlich einstellbar ist.

Dadurch wird erreicht, dass das Reaktionsgemisch in demjenigen Bereich, in dem es vor dem Querverteilorgan die grösste Anhäufung bildet, länger gehalten werden kann und dass dadurch das Reaktionsgemisch aus diesem Bereich zu den Seiten hin verdrängt wird, wo der Spalt weiter ist. Obwohl die Spaltweite — über die Arbeitsbreite gesehen — ungleich gross ist, ergibt sich überraschenderweise durch diese Massnahme eine gute Querverteilung in gleichmässiger Schichtdicke als Voraussetzung für ein gutes Endprodukt.

Vorzugsweise ist bei stationärer Reaktionsgemischaufgabevorrichtung die Weite des Spaltes in der Flucht des Auslaufes der Reaktionsgemischaufgabevorrichtung am geringsten und nimmt nach den Seiten hin zu.

In der Flucht des Auslaufes ist nämlich vor dem Querverteilorgan der Stau am grössten und muss zu den Rändern hin umgeleitet werden.

Nach einer besonderen Ausführungsform weist das Querverteilorgan eine Kufe auf, deren biegsame Kalibrierfläche — über die Arbeitsbreite gesehen — mit mehreren Stellschrauben an einem Balken des Querverteilorgans abgestützt ist. Messuhren erlauben die Messung der Spaltweite an verschiedenen Stellen.

Über diese sowohl der älteren als auch der vorliegenden Patentanmeldung gemeinsame Lösung hinaus wird erfindungsgemäss vorgeschlagen, dass das Querverteilorgan im Bereich eines einlaufseitig die Förderfläche bildenden, in Förderrichtung abwärts geneigten Aufgabetisches angeordnet ist.

Durch diese Massnahme lässt sich die Länge des Einlaufes bzw. die Gesamtlänge der Einrichtung in vorteilhafter Weise gering halten. Das Querverteilorgan ist dabei direkt über dem Aufgabetisch oder an seinem unteren Ende, d.h. in der Knickstelle, anzuordnen.

Vorzugsweise ist hinter dem Verteilorgan eine Nachkalibriervorrichtung vorgesehen. Diese besteht beispielsweise aus einem Kettenhemd oder aus Rollen, aus aufgelegten Matten oder dergleichen. Diese Ausführungsform ist insbesondere für Blockschäumeinrichtungen vorteilhaft.

Nach einer weiteren besonderen Ausführungsform ist die unterschiedliche Weite des Spaltes in Abhängigkeit von den Messwerten einer nachgeordneten Dicken- und Dichtemesseinrichtung automatisch einstellbar.

Dies geschieht beispielsweise dadurch, dass der Messwert in einen elektrischen Impuls umgesetzt wird, der über einen Verstärker einem Servomotor zugeleitet wird, der dann die zugehörige Stellschraube entsprechend verstellt.

Die Stellschrauben des Querverteilorgans weisen vorzugsweise ein Gewinde niedriger Ganghöhe auf, damit die bis in den ZehntelmillimeterBereich hinabreichende Einstellbarkeit mit entsprechender Genauigkeit vorgenommen werden kann.

Alternativ zu dem über der Förderfläche angeordneten Querverteilorgan stellt die Förderfläche im Bereich des Querverteilorgans einen Gleittisch dar, dessen biegsame Kalibrierfläche — über die Arbeitsbreite gesehen — über mehrere Stellschrauben an einem Balken abgestützt ist.

Alternativ zu einer Kufe als Querverteilorgan lässt sich eine Walze verwenden, deren Durchmesser stellenweise veränderbar ist. Dies ist beispielsweise zu verwirklichen, indem man die Walze an entsprechenden Stellen umwickelt, so dass der Spalt kleiner wird; oder indem man einen dehnbaren Oberflächenbelag für die Walze vorsieht oder dass in der Walze mehrere Kammern gebildet sind, die aufblasbar oder mit Spreizelementen versehen sind.

Es versteht sich, dass das Querverteilorgan auch insgesamt zur Grobeinstellung des Spaltes höhenverstellbar ist und dass es vorzugsweise auch längsverschiebbar ist, um in einem gewünschten Abstand von der Aufgabevorrichtung plazierbar zu sein. Ist die Arbeitsfläche des Gleittisches mit Klötzen hinterlegt, so sollte dieser Abschnitt des Gleittisches mit dem Querverteilorgan zusammen längsverschiebbar sein.

Zum Erzeugen eines guten Produktes ist es angeraten, das Reaktionsgemisch vor dem Querverteilorgan auf 5 bis 18°C, vorzugsweise 12 bis 18°C, zu kühlen und hinter dem Querverteilorgan Temperaturen von 30 bis 100°C, vorzugsweise 25 bis 50°C, anzulegen. Auf diese Weise wird die Reaktion des Gemisches vor dem Querverteilorgan verzögert, dahinter jedoch beschleunigt, so dass das Gemisch während der Querverteilung noch möglichst dünnflüssig ist. Bei der Herstellung von Sandwichplatten mit einem Schaumstoffkern von 0,5 bis 20 cm, vorzugsweise 2 bis 10 cm Dicke, liegt die Produktionsgeschwindigkeit in der Regel zwischen 5 und 50 m/min, vorzugsweise zwischen 8 und 25 m/min.

In einer Zeichnung ist die erfindungsgemässe Einrichtung in mehreren Ausführungsbeispielen rein schematisch dargestellt und nachstehend näher erläutert. Es zeigen:

Fig. 1 die gesamte Einrichtung in der Seitenansicht,

Fig. 2 die spaltbildende Stelle der Einrichtung gemäss Fig. 1 in vergrösserter räumlicher Darstellung,

Fig. 3 einen Gleittisch mit Mitteln zum Einstellen der Spaltweite in räumlicher Darstellung und

Fig. 4 eine belegte Walze als Querverteilorgan in räumlicher Darstellung.

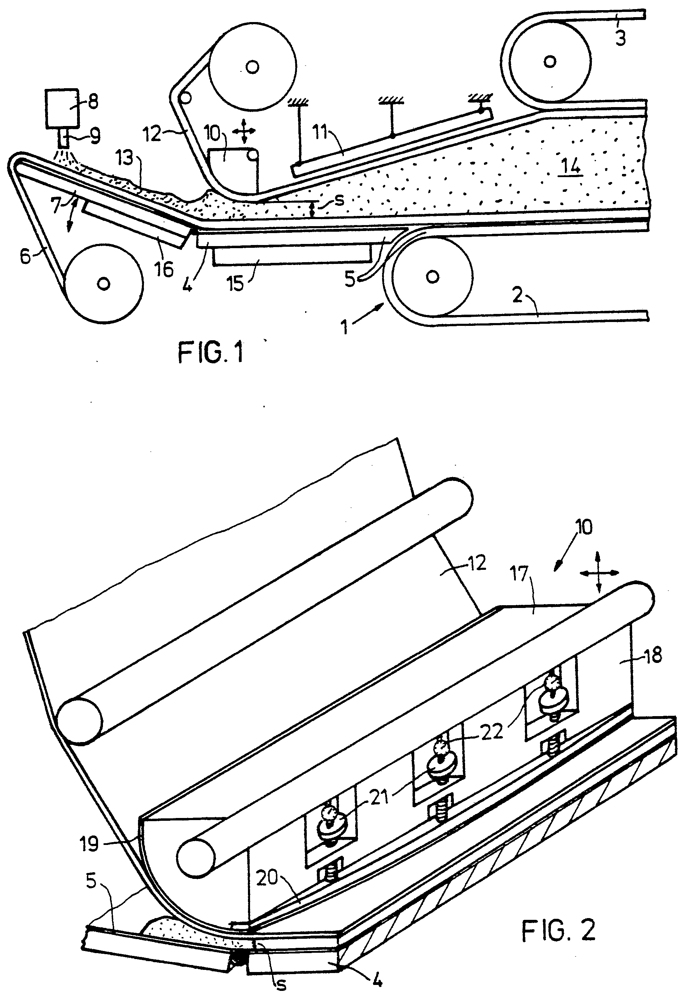

Gemäss Fig. 1 besteht ein Doppeltransportband 1 aus einem Unterband 2 und einem Oberband 3. Dem Unterband 2 ist ein Gleittisch 4 vorgeordnet, der zusammen mit dem Obertrum des Unterbandes 2 die Förderfläche 5 für eine Deckschicht 6 bildet. Sie gleitet über einen geneigten Aufgabetisch 7, der ebenfalls einen Teil der Förderfläche 5 darstellt und über dem eine Reaktionsgemischaufgabevorrichtung 8 angeordnet ist, die ein starres Auslaufrohr 9 aufweist. Im Bereich des Aufgabetisches 7 ist in der Knickstelle zwischen diesem und dem Gleittisch 4 ein Querverteilorgan 10 vorgesehen, das sowohl höhenverstellbar als auch in Förderrichtung verschiebbar ist. Ihm nachgeordnet ist eine Nachkalibriervorrichtung 11. Unter dem Querverteilorgan 10 ist eine obere Deckschicht 12 geführt. Das aufgetragene schäumfähige Gemisch ist mit 13 bezeichnet, der gebildete Schaumstoff mit 14. Unterhalb des Aufgabetisches 7 ist eine Kühlvorrichtung 16 vorgesehen; unterhalb des Gleittisches 4 eine Heizvorrichtung 15.

Das Querverteilorgan 10 (Fig. 2) besteht aus eine Kufe 17, die einen starren Balken 18 aufweist und deren Arbeitsfläche 19 aus einem biegsamen Blech besteht. Dieses ist an der Kalibrierstelle mit einer durchbiegbaren Leiste 20 hinterlegt, gegen die im Balken 18 gehaltene Stellschrauben 21 drücken. Den Stellschrauben 21 sind Messuhren 22 zugeordnet.

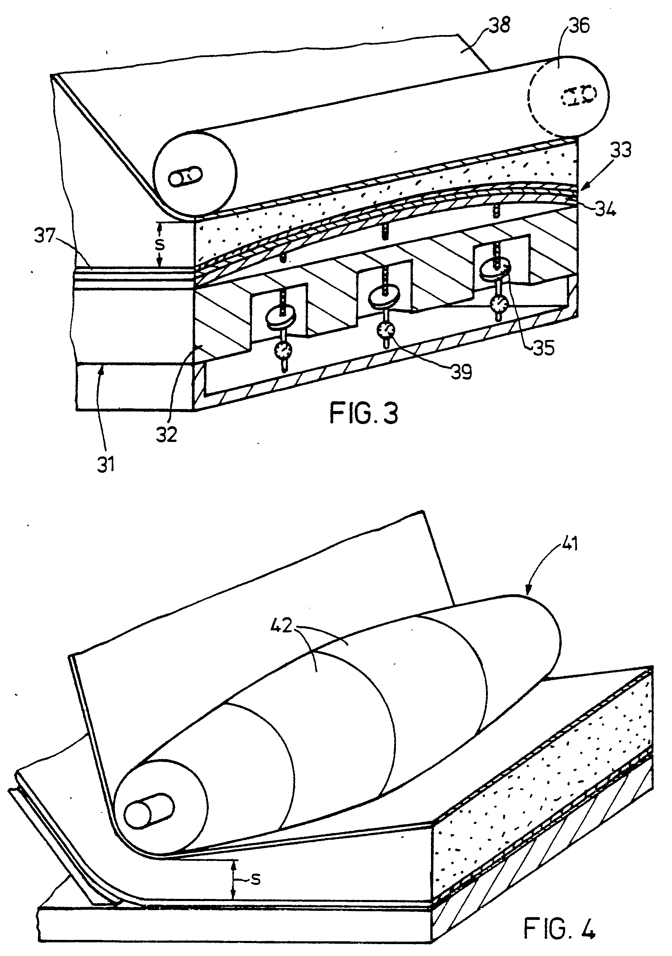

In Fig. 3 weist der Gleittisch 31 einen starren Balken 32 auf. Die Förderfläche 33 besteht aus einem biegsamen Blech, das im Bereich der Kalibrierstelle mit einer biegsamen Leiste 34 hinterlegt ist. Im Balken 32 sind Stellschrauben 35 gelagert, die gegen die biegsame Leiste 34 drücken. Über der Förderfläche 33 ist eine Walze 36 als Querteilorgan angeordnet, die als obere Spaltbegrenzung dient. Die untere Deckschicht 37 gleitet auf der Förderfläche 33; die obere Deckschicht 38 ist unter der Walze 36 geführt. Messuhren, die auf den Stellschrauben 35 aufliegen, sind mit 39 bezeichnet.

In Fig. 4 ist das Querverteilorgan 41 als Walze ausgeführt, die stellenweise austauschbare Bandagen 42 aufweist, wodurch die Ballikeit erreicht wird.

*Beispiel*

Benutzt wurde eine Doppelbandanlage, die mit einem feststehenden Mischkopf ausgestattet war. Dem Unterband war ein Gleittisch und diesem wiederum ein flacher Aufgabetisch vorgeordnet, dessen Oberfläche mit derjenigen des Obertrums des Unterbandes in einer Ebene lag. Als Querverteilorgan war eine Kufe vorgesehen, wie sie in Fig. 2 dargestellt ist.

Die Fördergeschwindigkeit betrug 10 m/min. Es wurde 14 l/min Reaktionsgemisch aufgegeben. Die Arbeitsbreite betrug 1,25 m. Es sollten Sandwichbahnen mit beidseitigen 0,1 mm dicken Papierdeckschichten, zwischen denen ein Hartschaumstoffkern angeordnet ist, hergestellt werden. Die Gesamtdicke der Bahnen sollte 40 mm betragen. Der Aufgabetisch wurde auf 15° C gekühlt, der Gleittisch auf ca. 30° C erhitzt.

Es wurde folgendes Reaktionsgemisch verwendet:

| | |
|---|---|
| 40,0 Gew.-Teile | eines Succroseäthers mit der OH-Zahl 520, |
| 12,0 Gew.-Teile | eines äthylendiamingestarteten Polyäthers mit der OH-Zahl 480, |
| 12,0 Gew.-Teile | Glycerin, |
| 1,8 Gew.-Teile | Wasser, |
| 1,5 Gew.-Teile | eines Silikonstabilisators (Type OS 710 der Bayer AG), |
| 1,5 Gew.-Teile | Dimäthylcyclohexylamin, |
| 45,0 Gew.-Teile | Trifluorchlormethan, |
| 201,0 Gew.-Teile | rohes 4,4-Diphenylmethandiisocyanat mit Isomeranteilen (Desmodor® 44V20 der Bayer AG). |

Die Reaktionszeit dieses Gemisches betrug 120 s, wobei auf die Startzeit 10 s entfielen, auf die Abbindezeit 20 s und auf die Aushärtungszeit 90 s. (Definitionen gemäss „Kunststoff-Handbuch", B. VII. „Polyurethane", Vieweg und Höchtlen, Carl-Hanser-Verlag, München, 1966.)

*Versuch 1*

Die Gemischaufgabestelle befand sich 1,25 m vor der als Querverteilorgan dienenden Stufe. Der Egalisierspalt hatte eine gleichmässige Weite von 145 mm. Es wurden völlig unbrauchbare Sandwichbahnen produziert, da das Reaktionsgemisch bis zum Aufschäumen nur auf eine Breite von 100 mm verteilt werden konnte. Die Rohdichte betrug 30 kg/m³, die Druckfestigkeit 0,18 MPa.

*Versuch 2*

Bis auf die Einstellung des Egalisierspaltes waren die Bedingungen die gleichen wie beim Versuch 1. Die maximale Spaltweite betrug (an den Rändern) 1,45 mm. In der Mitte war der Spalt um 0,18 mm enger, also 1,27 mm hoch; bei drei Vierteln der Arbeitsbreite war er jeweils 0,07 mm enger, also 1,38 mm. Das gefertigte Produkt besass einwandfrei ausgebildete Ränder und in der linken Randzone eine Dicke von 39,6 mm; bei einem Viertel, der Hälfte und drei Vierteln der Breite jeweils 40 mm, und die rechte Randzone besass eine Dicke von 40,2 mm. Damit lag die Dickentoleranz unter 2%. Die Druckfestigkeit des Produktes lag bei 0,28 MPa, also wesentlich höher als beim Versuch 1. Die Rohdichte betrug 30 kg/m³.

**Patentansprüche** die Vertragsstaaten: BE, DE, FR, GB, IT, NL, SE

1. Einrichtung zum kontinuierlichen Herstellen von Schaumstoffblöcken (14) oder Schaumstoffbahnen (14), die gegebenenfalls mit Deckschichten (6, 12; 37, 38) kaschiert sind, aus einem flüssigen Reaktionsgemisch (13), bestehend aus einer Förderfläche (5; 33) über welcher einlaufseitig eine Reaktionsgemischaufgabevorrichtung (8) und ein Querverteilorgan (10; 36; 41) für das Reaktionsgemisch vorgesehen sind, wobei zwischen dem Querverteilorgan (10; 36; 41) und der Förderfläche (5; 33) ein einstellbarer Spalt (s) gebildet ist, dessen Weite — über die Arbeitsbreite gesehen — unterschiedlich einstellbar ist, dadurch gekennzeichnet, dass das Querverteilorgan (10; 36; 41) im Bereich eines einlaufseitig die Förderfläche (5; 33) bildenden, in Förderrichtung abwärts geneigten Aufgabetisches (7) angeordnet ist.

2. Einrichtung nach Anspruch 1, dadurch gekennzeichnet, dass hinter dem Querverteilorgan (10; 36; 41) eine Nachkalibriervorrichtung (11) vorgesehen ist.

3. Einrichtung nach einem der beiden Ansprüche 1 oder 2, dadurch gekennzeichnet, dass die unterschiedliche Weite des Spaltes (s) in Abhängigkeit von den Messwerten einer nachgeordneten Dicken- und Dichtemessvorrichtung automatisch einstellbar ist.

4. Einrichtung nach einem der Ansprüche 1 bis 3, dadurch gekennzeichnet, dass die Förderfläche (33) im Bereich des Querverteilorgans (36) einen Gleittisch (31) darstellt, dessen biegsame Kalibrierfläche (33) — über die Arbeitsbreite gesehen — über mehrere Stellschrauben (35) an einem Balken (32) abgestützt ist.

**Patentansprüche** für die Vertragsstaaten: AT, CH, LI

1. Einrichtung zum kontinuierlichen Herstellen von Schaumstoffblöcken (14) oder Schaumstoffbahnen (14), die gegebenenfalls mit Deckschichten (6, 12; 37, 38) kaschiert sind, aus einem flüssigen Reaktionsgemisch (13), bestehend aus einer Förderfläche (5; 33) über welcher einlaufseitig eine Reaktionsgemischaufgabevorrichtung (8) und ein Querverteilorgan (10; 36; 41) für das Reaktionsgemisch vorgesehen sind, wobei zwischen dem Querverteilorgan (10; 36; 41) und der Förderfläche (5; 33) ein einstellbarer Spalt (s) gebildet ist, dadurch gekennzeichnet, dass die Weite des Spaltes (s) — über die Arbeitsbreite gesehen — unterschiedlich einstellbar ist.

2. Einrichtung nach Anspruch 1, dadurch gekennzeichnet, dass bei stationärer Reaktionsgemischaufgabevorrichtung (8) die Weite des Spaltes (s) in der Flucht des Auslaufes (9) der Reaktionsgemischaufgabevorrichtung (8) am geringsten ist und nach den Seiten hin zunimmt.

3. Einrichtung nach einem der beiden Ansprüche 1 oder 2, dadurch gekennzeichnet, dass das Querverteilorgan (10) eine Kufe (17) aufweist, deren biegsame Kalibrierfläche (19) — über die Arbeitsbreite gesehen — mit mehreren Stellschrauben (21) an einem Balken (18) des Querverteilorgans (10) abgestützt ist.

4. Einrichtung nach den Ansprüchen 1 bis 3, dadurch gekennzeichnet, dass die Förderfläche (33) im Bereich des Querverteilorgans (36) einen Gleittisch (31) darstellt, dessen biegsame Kalibrierfläche — über die Arbeitsbreite gesehen — über mehrere Stellschrauben (35) an einem Balken (32) abgestützt ist.

5. Einrichtung nach einem des beiden Ansprüche 3 oder 4, dadurch gekennzeichnet, dass den Stellschrauben (21; 35) Messuhren (22; 39) zugeordnet sind.

6. Einrichtung nach Anspruch 1, dadurch gekennzeichnet, dass das Querverteilorgan (41) aus einer Walze besteht, deren Durchmesser stellenweise veränderbar ist.

7. Einrichtung nach den Ansprüchen 1 bis 6, dadurch gekennzeichnet, dass hinter dem Querverteilorgan (10; 36; 41) eine Nachkalibriervorrichtung (11) vorgesehen ist.

8. Einrichtung nach den Ansprüchen 1 bis 7, dadurch gekennzeichnet, dass die unterschiedliche Weite des Spaltes (s) in Abhängigkeit von den Messwerten einer nachgeordneten Dicken- und Dichtemessvorrichtung automatisch einstellbar ist.

**Claims** for the Contracting States: BE, DE, FR, GB, IT, NL, SE

1. An apparatus for the continuous production of foam blocks (14) or foam webs (14) which are optionally covered with surface layers (6, 12; 37, 38) from a liquid reaction mixture (13), consisting of a conveying surface (5; 33) above which on the inlet side a reaction mixture feed device (8) and a transverse distributing member (10; 36; 41) for the reaction mixture are provided, and adjustable gap (s) being formed between the transverse distributing member (10; 36; 41) and the conveying surface (5; 33), the width of which can be adjusted to be different over the working width, characterised in that the transverse distributing member (10; 36; 41) is arranged in the region of a feed table (7) which forms the conveying surface (5; 33) on the inlet side and slopes downwards in the direction of conveyance.

2. An apparatus according to claim 1, characterised in that a device for subsequent calibration (11) is provided downstream of the transverse distributing member (10; 36; 41).

3. An apparatus according to claim 1 or 2, characterised in that the differing width of the gap (s) can be adjusted automatically as a function of the values measured by a subsequently arranged thickness and density measuring device.

4. An apparatus according to one of claims 1 to 3, characterised in that the conveying surface (33) in the region of the transverse distributing member (36) is a sliding table (31), the flexible calibration surface (33) of which is supported on a beam (32) by several set screws (35), as viewed over the working width.

**Claims** for the Contracting States: AT, CH, LI

1. An apparatus for the continuous production of foam blocks (14) or foam webs (14) which are optionally covered with surface layers (6, 12; 37, 38) from a liquid reaction mixture (13), consisting of a conveying surface (5; 33), above which on the inlet side a reaction mixture feed device (8) and a transverse distributing member (10; 36; 41) for the reaction mixture are provided, an adjustable gap (s) being formed between the transverse distributing member (10; 36; 41) and the conveying surface (5; 33), characterised in that the width of the gap (s) can be adjusted to be different over the working width.

2. An apparatus according to claim 1, characterised in that, when the reaction mixture feed device (8) is stationary, the width of the gap (s) is smallest in a line with the oulet (9) of the reaction mixture feed device (8) and increases towards the sides.

3. An apparatus according to claim 1 or 2, characterised in that the transverse distributing member (10) has a bar (17) whose flexible calibration surface (19) is supported on a beam (18) of the transverse distributing member (10) by several set screws (21)—as viewed over the working width.

4. An apparatus according to claims 1 to 3, characterised in that the conveying surface (33) in the region of the transverse distributing member (36) is a sliding table (31) the flexible calibration surface of which is supported on a beam (32) by several set screws (35)—as viewed over the working width.

5. An apparatus according to claim 3 or 4, characterised in that the set screws (21; 35) are provided with dial gauges (22; 39).

6. An apparatus according to claim 1, characterised in that the transverse distributing member (41) consists of a roller whose diameter can be varied in places.

7. An apparatus according to claims 1 to 6, characterised in that a device for subsequent calibration (11) is provided downstream of the transverse distributing member (10; 36; 41).

8. An apparatus according to claims 1 to 7, characterised in that the differing width of the gap (s) can be adjusted automatically as a function of the values measured by a subsequently arranged thickness and density measuring device.

**Revendications** pour les Etats contractants: BE, DE, FR, GB, IT, NL, SE

1. Dispositif pour la fabrication en continu de blocs ou de bandes de mousse (14) éventuellement doublés de couches de recouvrement (6, 12; 37, 38) à partir d'un mélange réactionnel liquide (13), ce dispositif étant constitué d'une surface de transport (5; 33) sur laquelle sont prévus, du côté de l'entrée, un dispositif de chargement (8) du mélange réactionnel et un organe transversal de répartition (10; 36; 41) pour le mélange réactionnel, un espace réglable (s) étant formé entre l'organe transversal de répartition (10; 36; 41) et la surface de transport (5; 33), espace dont la largeur, vu dans le sens de la largeur de travail, peut être réglée différemment, caractérisé en ce que l'organe transversal de répartition (10; 36; 41) est disposé dans la zone d'une table de chargement (7) inclinée vers le bas dans le sens de transport et formant, du côté de l'entrée, la surface de transport (5; 33).

2. Dispositif suivant la revendication 1, caractérisé en ce que, derrière l'organe transversal de répartition (10; 36; 41), est prévu un dispositif de recalibrage (11).

3. Dispositif suivant l'une des revendications 1 ou 2, caractérisé en ce que la largeur différente de l'espace (s) peut être réglée automatiquement en fonction des valeurs de mesure d'un dispositif de mesure d'épaisseur et de densité situé en aval.

4. Dispositif suivant l'une des revendications 1 à 3, caractérisé en ce que, dans la zone de l'organe transversal de répartition (36), la surface de transport (33) constitue une table de glissement (31) dont la surface de calibrage flexible (33), vue dans le sens de la largeur de travail, prend appui sur une poutre (32) au moyen de plusieurs vis de réglage (35).

**Revendications** pour les Etats contractants: AT, CH, LI

1. Dispositif pour la fabrication en continu de blocs ou de bandes de mousse (14) éventuellement doublés de couches de recouvrement (6, 12; 37, 38) à partir d'un mélange réactionnel liquide (13), ce dispositif étant constitué d'une surface de transport (5; 33) sur laquelle sont prévus, du côté de l'entrée, un dispositif de chargement (8) du mélange réactionnel et un organe transversal de répartition (10; 36; 41) pour le mélange réactionnel, un espace réglable (s) étant formé entre l'organe transversal de répartition (10; 36; 41) et la surface de transport (5; 33), caractérisé en ce que la largeur de l'espace (s), vu dans le sens de la largeur de travail, peut être réglée différemment.

2. Dispositif suivant la revendication 1, caractérisé en ce que, lorsque le dispositif de chargement (8) du mélange réactionnel est immobile, la largeur de l'espace (s) est la plus faible au ras de la sortie (9) du dispositif de chargement (8) du mélange réactionnel, tandis qu'elle augmente vers les côtés.

3. Dispositif suivant l'une des revendications 1 ou 2, caractérisé en ce que l'organe transversal de répartition (10) comporte un patin (17) dont la surface de calibrage flexible (19), vue dans le sens de la largeur de travail, prend appui, au moyen de plusieurs vis de réglage (21), sur une poutre (18) de l'organe transversal de répartition (10).

4. Dispositif suivant les revendications 1 à 3, caractérisé en ce que, dans la zone de l'organe transversal de répartition (36), la surface de transport (33) constitue une table de glissement (31) dont la surface de calibrage flexible, vue dans le sens de la largeur du travail, prend appui sur une poutre (32) au moyen de plusieurs vis de réglage (35).

5. Dispositif suivant l'une des revendications 3 ou 4, caractérisé en ce que des compteurs (22; 39) sont adaptés aux vis de réglage (21; 35).

6. Dispositif suivant la revendication 1, caractérisé en ce que l'organe transversal de répartition (41) est constitué d'un cylindre dont le diamètre peut être modifié par endroits.

7. Dispositif suivant les revendications 1 à 6, caractérisé en ce que, derrière l'organe transversal de répartition (10; 36; 41), est prévu un dispositif de recalibrage (11).

8. Dispositif suivant les revendications 1 à 7, caractérisé en ce que la largeur différente de l'espace (s) peut être réglée automatiquement en fonction des valeurs de mesure d'un dispositif de mesure d'épaisseur et de densité installé en aval.

FIG.1

FIG. 2

FIG. 3

FIG. 4